# EUROPÄISCHE PATENTSCHRIFT

(11) **EP 2 177 395 B1**
(45) Veröffentlichungstag und Bekanntmachung des Hinweises auf die Patenterteilung: **16.05.2012**
(21) Anmeldenummer: 09153556.7
(22) Anmeldetag: 25.02.2009
(51) Int. Cl.: B60N 2/28

(54) **Mittel zum Absorbieren der auf einen Sicherheitsgurt an einem Kindersicherheitssitz auftretenden Aufprallkräfte**
Agent for absorbing the impact force on a seatbelt on a child safety seat
Moyen d'absorption des forces de collision survenant sur une ceinture de sécurité sur un siège de sécurité pour enfant

(30) Priorität: 20.10.2008 DE 202008008884 U
(43) Veröffentlichungstag der Anmeldung: 21.04.2010
(73) Patentinhaber: Curt Würstl Vermögensverwaltungs-GmbH & Co. KG, 95032 Hof (DE)
(72) Erfinder: Würstl, Jan-Stefan, 95194 Regnitzlosau (DE)
(74) Vertreter: Pröll, Jürgen

(56) Entgegenhaltungen:
- EP-A1- 1 167 114
- EP-A2- 1 762 425
- DE-A1- 19 610 917
- DE-B4-102005 039 711
- US-A1- 2004 095 004

## Beschreibung

Die Erfindung betrifft ein Mittel zum Absorbieren der auf einen Sicherheitsgurt an einem Kindersicherheitssitz in Folge einer ruckartigen, hohen Stoßbelastung auftreffenden Aufprallkräfte, welcher Sicherheitsgurt ein Sicherheitsgurt eines Fahrzeugsitzes ist und zum Halten des Kindersicherheitssitzes am Fahrzeugsitz und/oder zum Sichern des Kindes in dem Kindersicherheitssitz dient und um mindestens eine Kante einer Führung an den Sitzseitenwänden des Sitzteiles des Kindersicherheitssitzes derart gelegt ist, dass der Sicherheitsgurt beim Aufprall um die mindestens eine Kante gestrafft wird.

Aus der DE 196 47 805 C1 ist eine Vorrichtung zum Absorbieren der auf einen Sicherheitsgurt an einem Auto- oder einem Kindersicherheitssitz in Folge einer ruckartigen hohen Stoßbelastung auftreffenden Aufprallkräfte und damit auf gesicherte Personen oder Gegenstände, bekannt, die aus einem U-förmigen Lagerelement besteht, in das quer verlaufend der Sicherheitsgurt eingelegt ist und darin mittels eines einsetzbaren Klemmelementes gesichert gehalten ist. Die Seitenwände des U-förmigen Lagerelementes werden bei bestimmter Krafteinwirkung deformiert, wodurch die Stoßkräfte absorbiert und die Stoßbelastungen gedämpft werden. Diese bekannten Gurtkraftbegrenzer, die beim Aufprall deformieren, müssen stets durch neue ersetzt werden.

Aus der DE 201 11 219 U1 ist ein Gurtkraftbegrenzer für einen Sicherheitsgurt bekannt, der eine Umlenkungsaufnahme für den Sicherheitsgurt, bestehend aus mindestens zwei an einer Trägerplatte beabstandet zueinander angeordneten Umlenkbolzen, aufweist. Zwischen den beiden Umlenkbolzen ist eine von der Zugspannung des Gurtes abhängige, veränderbare Spanneinrichtung mit einem Umlenkkopf vorgesehen, der den Sicherheitsgurt im Wesentlichen über die gesamte Breite derart untergreift, dass der Sicherheitsgurt um die maximale Auslenkungshöhe der Spanneinrichtung gegenüber dem Umlenkbolzen angehoben wird. Dies sorgt dafür, dass der Gurt bei normalem Betrieb gespannt ist. Der Sicherheitsgurt ist mit einem Ende an einem ersten Fixpunkt und mit dem anderen Ende an einem zweiten Fixpunkt befestigt. Im Falle des Aufpralls des Fahrzeuges wird der Gurt durch die einwirkende Stoßbelastung gegen die Kraft des Umlenkungskörper gespannt. Der Gurtkraftbegrenzer dämpft die impulsartig auftretenden Kräfte durch Strecken der Spanneinrichtung und ermöglicht zugleich ein geringfügiges Nachgeben des Sicherheitsgurtes, so dass Verletzungen der Person, die damit gesichert ist, z. B. durch Einschneiden des Gurtes, vermieden werden. Der Gurtkraftbegrenzer ist außerordentlich kompliziert aufgebaut und damit teuer.

Aus der DE 10 2005 039 711 B4 ist ein Kindersitz für Kraftfahrzeuge mit einem Sitz- und einem Rückenlehnenteil bekannt, welcher Kindersitz ein eigenes Gurtsystem zum Sichern des Kleinkindes in dem Kindersitz mittels einzelner Gurte oder Gurtabschnitte aufweist, die die Körperteile des Kindes überspannen und durch schlitzartige Durchbrüche mindestens im Rückenlehnenteil und/oder Sitzteil hindurchgesteckt und an der Rückseite des Rückenlehnenteils oder an der Unterseite des Sitzteiles befestigt und/oder von Spannvorrichtungen oder über einen Zentralgurtversteller gespannt sind. Auf das Gurtsystem wirkt ein Gurtkraftbegrenzer mit einem Dämpfungsglied. Ein Zentralgurtversteller und/oder mindestens eine Spannvorrichtung oder eine Befestigungseinrichtung an einem Ende eines Gurtes oder eine Gurtumlenkeinrichtung kann dabei an dem Sitzteil oder an der Rückenlehne vorgesehen sein. Das Dämpfungsglied selbst ist eine hydraulische, eine pneumatische, eine Gasdruck- oder eine kombinierte Zylinder-Kolben-Einheit mit mindestens einem Zylinder und einer Kolbenstange. Die Kolbenstange wirkt auf die Gurtumlenkungsvorrichtung oder den Zentralgurtversteller im Falle eines Aufpralls so, dass die Aufprallkräfte hierüber gedämpft werden. Diese Einrichtung ist sehr aufwändig und teuer.

Alle bekannten Gurtkraftbegrenzer sind Vorrichtungen mit besonderer Ausbildung, die entweder durch Deformation oder durch hydraulische oder pneumatische Dämpfungsmittel eine dämpfende Wirkung auf den Sicherheitsgurt im Falle einer Stoßbelastung ausüben, wie sie z. B. bei einem Crash eines Fahrzeugs gegeben ist, in welchem ein Kindersitz entweder mit den fahrzeugeigenen Sicherheitsgurten gehalten ist oder ein Kindersitz befestigt ist, beispielsweise über Isofix-Verbindungen, der ein eigenes Gurtsystem, z. B. Hosenträgergurtsystem, mit Schrittgurtverschluss aufweist. Mittels dynamischer Versuche mit entsprechend instrumentierten Dummies lassen sich die Belastungswerte, denen ein menschlicher Körper z. B. während eines Verkehrsunfalls ausgesetzt ist, simulieren. Diese Belastungskurven sind in der Regel von relativ kurzen Belastungsspitzen gekennzeichnet, die im Moment der stärksten Rückhaltung des Kindes in dem Kindersitz oder des Aufschlags auftreten. Diese Belastungsspitzen können zu einem deutlichen Verletzungsrisiko für das so gesicherte Kind im Kindersitz des Fahrzeuges führen.

Aus der DE 196 10 917 A1 ist ein Kindersicherheitssitz für Kraftfahrzeuge bekannt, der einen Sitz mit einer Sitzfläche und einer Rückenlehne mit in verschiedenen Höhen vorgesehenen Schultergurtumlenkungen für Sicherheits-Schultergurte aufweist. Die Sicherheits-Schultergurte sind an der von der Sitzfläche abgewandten Seite der Rückenlehne befestigt und durch die der Größe eines Kindes entsprechend ausgewählten Schultergurtumlenkungen in den Sitzbereich geführt. Zur Ausübung einer Dämpfung bei Stoßbelastung auf den Schultergurt sind Mittel vorgesehen, die zwischen den Schultergurtumlenkungen und den Befestigungspunkten der Schultergurte mit den Schultergurten in Kontakt stehen und durch von den Schultergurten ausgehende Zugkräfte zur Erreichung einer Gurtnachgiebigkeit begrenzt plastisch verformbar sind. Es handelt sich hierbei um zusätzliche Mittel, wie beispielsweise V-förmig gebogene Federn, die einen relativ großen Schwenkbereich aufweisen und damit einen entsprechend großen Lagerraum benötigen. Als zusätzliches Bauteil müssen sie deshalb in einer Kammer zwischen Umlenkkante des Durchbruches und dem Befestigungspunkt gelagert sein.

Die Patentschrift US 2004/09 5004 A1 betrifft Gurte für Kindersitze. Insbesondere beschreibt diese Patentschrift Energieabsorber, die aus einem elastischen Material hergestellt worden sind, um sich beim Auftreten von Lastkräften zu deformieren. Die Energieabsorbierer 24, 124 und 224 sind jeweils für einen Haltegurt im oberen Rückbereich des Sitzes im Gurt oder am Sitz vorgesehen.

Die Patentschrift DE 196 10 197 A1 betrifft einen Kindersitz für Kraftfahrzeuge, der nutzbar ist, um Kinder, die für die Nutzung der normalen Sicherheitsgurte des Kraftfahrzeuges noch zu klein sind, sicher unterzubringen. Dazu beschreibt diese Patentschrift in Verbindung mit dem Gurtsystem des Kindersicherheitsgurtes ein Biegeelement, das sich bei Auftritt von Zugkräften der Schultergurte innerhalb einer Biegezone plastisch verformt.

Die Patentschrift EP 1 762 425 A2 betrifft Sicherheitssitze für Kinder. In diesen Sicherungssitzen sind im rückseitigen Bereich des Sitzes Dämpfungselemente angeordnet. Jedes dieser energieabsorbierenden Teile umfasst einen Block aus zusammendrückbarem Material. Dieser wird beim Aufprall eines Fahrzeugs durch des Gurtsystems des Kindersitzes und dem Kind zusammen gedrückt, wodurch ein bedeutender Betrag der Kraft absorbiert wird. Diese energieabsorbierenden Teile können auch an anderen Positionen des Sitzes angeordnet sein, wie beispielsweise unter dem Kindersitz.

Patentschrift EP 1 167 114 A1 betrifft einen Kindersitz, auf dem im Bereich der Sitzfläche ein absorbierendes Material angeordnet ist.

Ausgehend vom bekannten Stand der Technik und der dargestellten Problematik liegt der Erfindung die Aufgabe zugrunde, eine hohe Dämpfung der auf einen über dem Sitzteil des Sitzes wirkenden Aufprallkräfte mit einem Mittel in Form eines Gurtkraftbegrenzers anzugeben, das besonders einfach ausgestaltet ist, als fester Bestandteil oder auch als Nachrüstsatz in Verbindung mit dem Sitzteil verwendet werden kann und nach einem Sicherheitsfall nicht ausgetauscht werden muss oder besonders einfach austauschbar ist.

Die Aufgabe löst die Erfindung durch die im Anspruch 1 angegebenen Mittel zum Absorbieren der auf einen Sicherheitsgurt an einem Kindersicherheitssitz in Folge einer ruckartigen, hohen Stoßbelastung auftreffenden Aufprallkräfte.

Je nach Bauausführung eines Kindersicherheitssitzes kann dieser z. B. mittels Isofix-Haltern an einem Fahrzeugsitz befestigt sein. Diese Isofix-Halter sind in einem Unterteil des Kindersicherheitssitzes angebracht und auf Quer bolzen am Fahrzeugsitz lösbar aufgerastet, so dass der Kindersitz gesichert am Fahrzeugsitz gehalten ist. Diese Befestigungsart, die auch eine Bodenstütze ergänzend aufweisen kann, wird bei modernen Kindersicherheitssitzen mit einem eigenständigen Gurtrückhaltesystem für das Kind verwendet. Dieses Gurtrückhaltesystem ist eine Art Hosenträgergurtsystem, das, wie vorher schon beschrieben, Schultergurte aufweist, die durch Schlitze in der Rückwand des Kindersitzes geführt und an der Rückseite befestigt oder mit einem zentralen Gurtspanner verbunden sind. Die vorderseitigen Schultergurte sind unten mit Schlosszungen versehen, die in ein Schloss einsteckbar sind. Dieses Schloss ist beispielsweise an einem Schrittgurt befestigt, der zwischen den Beinen des Kindes verläuft. Es können aber auch hier andere Gurtsysteme vorgesehen sein, insbesondere solche, die eine zentrale Spannung der Gurte ermöglichen. Zur Höhenverstellung können die Schultergurte durch parallel angeordnete Durchbrüche höhenversetzt eingeführt werden.

Solche Sitze können aber auch zusätzlich durch den vorhandenen Sicherheitsgurt des Fahrzeuges, z. B. den Beckengurt oder einen Schultergurt oder beide Abschnitte eines 3-Punkt-Sicherheitsgurtes, gesichert werden. Der Schultergurt verläuft dabei entweder schräg über die Rückenlehne und wird im oberen Bereich oberhalb der Schulter umgelenkt oder durch vorgesehene Führungen an den Schulterseitenwänden oder den Kopfstützenseitenwänden hindurchgeführt oder über den Körper des Kleinkindes. Ebenso kann der Beckengurtabschnitt oder der Beckengurt durch quer verlaufende Führungen im Sitzteil dazu verwendet werden, um den Sicherheitssitz zusätzlich oder allein in dieser Form zu sichern. Werden beide Gurtabschnitte, beispielsweise die eines 3-Punkt-Gurtes, oder die einzelnen Gurte, Beckengurte und Schultergurte, zur Sicherung verwendet, muss nicht unbedingt eine Isofix-Verbindung vorgesehen sein.

In jedem Fall werden die eigenen Gurte des Kindersicherheitssitzes, nämlich insbesondere die Schultergurte, durch Durchführungen hindurchgezogen und liegen damit an den Kantenbereichen dieser Durchführungen an. Ebenso liegen die Beckengurte oder der Schultergurt an Umlenkstellen oder -kanten der Führungen an. Dies ist auch dann gegeben, wenn ein Schalensitz, der einteilig oder zweiteilig ausgebildet ist, mit einem darin sitzenden Kleinkind gemeinsam am Fahrzeugsitz mit dem fahzeugeigenen 3-Punkt-Sicherheitsgurt gesichert wird. Der Beckenabschnitt wird dabei quer über das Kind im Lendenbereich gelegt und in Führungen in den Seitenwänden des Sitzteils geführt. Der Schultergurt wird über den Oberkörper des Kindes gezogen und über Umlenkführungen in der Rückenlehne, den Seitenwänden oder der jeweiligen Seitenwand der Kopfstütze umgelenkt. Durch die Fixpunkte des 3-Punkt-Sicherheitsgurtes im geschossenen Zustand desselben ist sichergestellt, dass das Kind mitsamt dem Kindersitz beispielsweise auf dem Rücksitz eines Fahrzeuges gesichert gehalten wird, auch dann, wenn in Folge eines Crashs Aufprallkräfte entstehen, die den Kindersitz nach vorne verschieben.

Eine weitere erfindungsgemäße Ausgestaltung sieht vor, dass mindestens in dem Umlenkungskantenbereich der Führung ein kompressierbares elastisches, ein plastisch verformbares oder ein federbelastetes Dämpfungselement eingesetzt oder abgestützt ist, das abhängig von einer definierten Federcharakteristik in den Körper oder gegen den Körper des Sicherheitssitzes verschiebbar oder verschwenkbar gelagert oder elastisch oder plastisch verformbar ist. Im letzteren Fall muss das irreversibel verformte Dämpfungselement zwar ausgetauscht werden, ist aber auf Grund der einfachen Struktur und Lagerung nicht vergleichbar mit den bekannten Dämpfungselementen, die nicht in Kammern des Sicherheitssitzes einfügbar sind.

Im Falle eines elastisch verformbaren Dämpfungselementes bietet sich beispielsweise ein Schaumstoffkörper mit bestimmten Kompressionseigenschaften an, der nach der Komprimierung wieder expandiert und zu seiner Ursprungsform zurückfindet. Auch plastisch verformbare Dämpfungselemente sind von der Erfindung mit erfasst. Hierbei handelt es sich beispielsweise Kunststoffhohlkörper mit definierter Wandstärke und Querschnittsform mit einem kontrolliertem oder nicht kontrolliertem Luftauslass. Ein federbelastetes Element, beispielsweise ein eckiger Hohlkasten, ist hingegen verschiebbar gelagert, so dass dieser gegen die Kraft von eingesetzten Federn einer Federanordnung verschiebbar ist, wodurch die Dämpfung in gleicher Weise erzielbar ist. Ebenfalls ist dies durch Anlage des Gurtes an einem federbelasteten Schwenkhebel gegeben.

In einfachster Ausgestaltungsform können an den Umlenkkanten Polsterungen aufgebracht sein, die sich in der Charakteristik von dem übrigen Körper des Kindersicherheitssitzes in der Elastizität wesentlich unterscheiden. Bekanntlich werden die Körper aus Hartschaum oder aus einem geblasenen oder gespritztem Kunststoffkörper hergestellt. Diese Körper haben zwar auch eine dämpfende Wirkung, wenn die Gurte durch Durchbrüche geführt sind. Diese dämpfende Wirkung ist aber nicht definiert und der Körper selbst zu hart, um eine gewünschte Dämpfung entlang einer Dämpfungskennlinie zu erreichen. Dies ist mit den Mitteln nach der Erfindung jedoch auf einfache Weise erziel- und realisierbar.

Wird beispielsweise ein Schultergurt eines Hosenträgergurtes an einem Kindersitz durch eine Durchführung in der Rückwand hindurchgeleitet, so sieht die Erfindung vor, dass beispielsweise vorderseitig oder auch rückseitig an der Kante ein Polster aufgeklebt oder in eine Ausnehmung eingesetzt ist, das aus einem Schaumkunststoff besteht, das eine ganz bestimmte, gewünschte Dämpfungscharakteristik aufweist. Im Falle des Aufpralls wird also dieser Körper komprimiert und bewirkt die gewünschte Gurtkraftbegrenzung.

Anstelle eines elastischen Dämpfungselementes kann aber auch ein verschiebbares oder verschwenkbares Dämpfungselement eingesetzt werden, das in den Durchbruch hineinreicht und gegen die Kraft einer Feder längsverschiebbar oder verschwenkbar angeordnet ist. Eine solche Anordnung kann grundsätzlich an allen Umlenkungsstellen der Gurte, die zum Halten des Kindersicherheitssitzes und/oder des Kindes vorgesehen sind, angebracht sein. Die Mittel nach der Erfindung sind auch stets nach einem Aufprall wieder voll einsatzfähig und müssen nur in dem Fall ersetzt werden, in dem plastisch verformbare Dämpfungsmittel zum Einsatz kommen. Sie können bezüglich ihrer Federcharakteristik so ausgebildet sein, dass auch bei erhöhter Kraftausübung auf die Gurte, beispielsweise bei einer starken Abbremsung, die zu keinem Crash führt, die Wirkung bereits gegeben ist. Diese Wirkung kann beispielsweise in einem modularen Aufbau des Dämpfungselementes liegen, bei dem mehrere Schichten des Dämpfungsmaterials, die jeweils unterschiedliche Verformungskennlinien aufweisen, erreicht werden. Durch diese Methode ist beispielsweise auch eine große Bandbreite der heranwachsenden kindlichen Masse abdeck bar. Dies ist mit den bekannten Mitteln nicht erzielbar. Diese wirken erst in einem so hohen Belastungsfall, der stets auf einen Crash zurückzuführen ist.

Vorteilhafte Ausgestaltungen der Erfindung sind in den Unteransprüchen im Detail angegeben.

In den Sitzseitenwänden des Sitzteiles des Kindersicherheitssitzes können Führungen zur Aufnahme des Beckengurtes oder des Beckengurtabschnittes eines 3-Punkt-Sicherheitsgurtes des Fahrzeugsitzes eingearbeitet sein. In die Führungen oder in einer sich daran anschließenden Kammer in der Seitenwand kann mindestens an der einen Seite des Kindersitzes ein Dämpfungsglied eingesetzt sein, das sich mindestens rückseitig an einer Wand der Seitenwand abstützt. Das Widerlager sorgt also dafür, dass das Dämpfungselement entweder komprimiert wird oder sich verschieben kann. Grundsätzlich können aber auch dann, wenn das Kind über den Beckengurtabschnitt nicht mitgesichert wird, sondern nur der Sitz hiermit befestigt wird, zu welchem Zweck in den Sitzseitenwänden, beispielsweise untenseitig des Sitzteiles des Kindersicherheitssitzes, Führungen zur Aufnahme des Beckengurtes des Fahrzeugsitzes eingearbeitet sein können, durch den der Beckengurt hindurchgezogen wird, solche Polster oder Dämpfungselemente vorgesehen sein, um die auf den Sitz ausgeübten Beschleunigungskräfte zu absorbieren. Wenn die Führungen leicht schräg verlaufen, so wird auch hierüber eine Aufprallkraft auf den Beckengurt ausgeübt, so dass auch Dämpfungselemente in den Umlenkkantenbereichen dafür Sorge tragen, dass die Stoßkräfte absorbiert werden. Wenn weiterhin die Schultergurte des sitzeigenen Systems entsprechend der Erfindung geführt oder ausgeführt sind, ist eine doppelte Dämpfung gegeben.

Im Falle der Verwendung eines Verschiebekörpers, beispielsweise aus härterem Kunststoff, muss eine Federanordnung, beispielsweise Druckfedern als Wendelfedern, in einer Lagerkammer abgestützt sein, welche Federn die Stützwand in dem Verschiebeteil oder dem verschwenkbaren Teil hintergreifen, so dass gegen die Kraft der Feder oder der Federn eine Verschiebung oder ein Verschwenken in den Körper des Sitzteiles, beispielsweise in der Seitenwand, ermöglicht wird. Aber auch der Schultergurt des fahrzeugeigenen Sicherheitsgurtes kann über ein Dämpfungselement verlaufend angeordnet sein. Dieses Dämpfungselement wird in einfachster Ausgestaltung durch ein entsprechendes Polster gebildet, das auch die Unterwand eines Durchbruches in einer Rückenlehne begrenzen kann. Es ist ersichtlich, dass alle Führungsmöglichkeiten, die eine Umlenkkante vorsehen, mit solchen Polsterungen versehen werden können. Dies können beispielsweise wulstartige Polster aus unterschiedlichen Schaumstoffen sein.

Die Erfindung ist, wie schon ausgeführt, auch anwendbar auf Sicherheitsgurtsysteme, die sich am Kindersitz selbst befinden. Diese Gurtsysteme bestehen in der Regelaus zwei Schultergurten, die in der Regel mindestens rückseitig zusammengeführt oder mit Querbolzen an der Rückenlehne befestigt sind, die versetzbar sind, um eine Längenanpassung vornehmen zu können.

Um eine Dämpfung bzw. ein Absorbieren der Aufprallkräfte auf den Gurt zu erreichen, ist in dem nebengeordneten Anspruch 7 eine andere Ausführung vorgesehen, wonach der Gurt mindestens Teilabschnitte aufweist, die elastisch ausgebildet sind, und zwar so federelastisch, dass sie bestimmten Federkennlinien folgend gedehnt werden können und sich auch wieder zusammenziehen. Bei Verwendung solcher Gurte ist das Vorsehen von Dämpfungselementen der zuvor beschriebenen Art nicht erforderlich, da die Dämpfungselemente durch die Gurtabschnitte selbst gebildet werden. Sie können allerdings auch ergänzend vorgesehen sein, so dass beispielsweise ein erster Dämpfungseffekt über die eingesetzten Dämpfungselemente erfolgt und ein zweiter Dämpfungseffekt durch die Gurtabschnitte selbst erzielbar ist. Die elastischen Abschnitte können dabei in das Gurtsystem eingewebt oder z. B. durch Vernähen und Verschweißen eingefügt sein.

Die Dämpfungselemente können auch austauschbar ausgeführt sein, um die Federcharakteristik an die Größe bzw. das Gewicht des Kleinkindes anpassen zu können, das in dem Sitz sitzt. Es können aber auch Federn in dem Dämpfungsglied eingeordnet sein, die sich von außen spannen lassen, um eine gewünschte Federcharakteristik, angepasst an die Größe des Kindes oder an das Gewicht des Kindes, zu erreichen. In jedem Fall bewirken die Dämpfungselemente, dass die auf die Umlenkkante ausgeübte Kraft bei Stoßbelastung gedämpft wird, um eine physische Schädigung des Kindes durch den Gurt, der das Kind zurückhält, zu vermeiden.

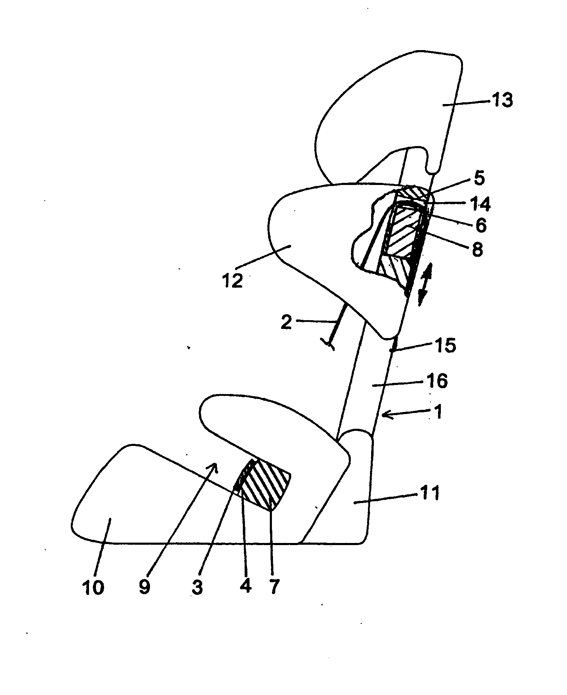

Die Erfindung wird nachfolgend anhand des in der einzigen Figur schematisch dargestellten Ausführungsbeispiels ergänzend erläutert.

In der einzigen Figur ist ein Kindersitz 1 dargestellt, der in bekannter Weise auf einen Fahrzeugsitz, beispielsweise auf einen Rücksitz eines Fahrzeuges, aufstellbar ist. Der Sitz kann an dem Fahrzeugsitz mittels Isofix-Verbinder oder mittels des fahrzeugeigenen Gurtsystems gehalten sein. Der Kindersitz 1 selbst besteht aus einem Sitzteil 11 und einem Rückenlehnenteil 16, die entweder fest oder verschwenkbar miteinander verbunden sind, um beispielsweise den Kindersitz 1 auch als Liegesitz verwenden zu können. In der Regel ist an der Rückenlehne 16 auch verschiebbar eine Kopfstütze 13 gelagert. In der Rückenlehne 16 oder der Kopfstütze 13 befindet sich mindestens ein Durchbruch 14 oder ein Gurtführungselement, durch den hindurch ein Schultergurt 2 eines sitzeigenen Gurtsicherungssystems oder der Schultergurt eines Fahrzeuggurtes geführt ist. Der Schultergurt 2 ist z. B. Teil eines Hosenträgergurtes oder der Schultergurt eines Fahrzeuggurtes. Beide Schultergurte 2 sind im Falle eines im Kindersitz integrierten Gurtes vorderseitig über nicht dargestellte Schlosssysteme im Beckenbereich des Kindes miteinander verbunden, während sie hinten entweder einzeln mit Querbolzen in der Rückenlehne fixiert oder zusammengeführt sind, wobei der mittige Verlängerungsgurt einem Zentralgurtspanner im Sitzteil zugeführt wird, über den die Gurte gespannt werden. Das Schlosssystem ist an einem Schrittgurt befestigt, der zwischen den Beinen des Kindes am Sitzteil befestigt ist.

Die Figur zeigt, dass der Schultergurt 2 an einem Dämpfungselement 8 anliegt. Dieses Dämpfungselement 8 besteht im Ausführungsbeispiel aus einem Schaumstoffkörper bestimmter Elastizität und bildet obenseitig mit der Querwand in dem Rückenteil eine Durchgangsöffnung 14. Der Gurt 2 liegt an der vorderen Kante 5 und an der hinteren Kante 6 des Dämpfungselementes 8 an. Die Kanten 5, 6 sind im Ausführungsbeispiel abgerundet, können aber auch eckig ausgeführt sein. Aus der Abbildung ist bereits ersichtlich, dass dann, wenn ein Aufprall des Fahrzeuges erfolgt und eine Beschleunigungskraft auf den Schultergurt 2 ausgeübt wird, der Schultergurt 2 das Dämpfungselement nach unten drückt. Durch die Elastizität wird dabei die Gurtkraft nach einer bestimmten Federkennlinie des Körpers begrenzt bzw. eine hohe Dämpfung ausgeübt, so dass der Schultergurt 2 beispielsweise nicht in die Schulter des Kindes einschneiden kann. Die hinter der Rückenlehne 16 gezeichneten Pfeile verdeutlichen, dass die Kopfstütze 13 und/oder auch die Schulterseitenwände 12 in der Höhe verschiebbar sind.

An dem Sitzteil 11 sind seitlich Seitenwände 10 vorgesehen. In diese Seitenwände 10 sind Führungen 9 schlitzartig eingearbeitet bzw. ausgeformt. Der Körper kann beispielsweise im Blasverfahren aus Kunststoff hergestellt sein. Im hinteren Bereich der Führung 9 ist eine Befestigungseinrichtung, eine Ausnehmung oder eine Lagerkammer zur Aufnahme eines Dämpfungselementes 7 vorgesehen, an dessen vordere Kante 4 oder Seitenkante der Beckengurt 3 des Fahrzeugsitzes anliegt, wenn dieser mit der Schlosszunge in ein Schloss eingesetzt ist. Es ist ersichtlich, dass hierüber auch ein in dem Kindersitz des Sicherheitssitzes sitzendes Kind gemeinsam mit dem Sicherheitssitz am Fahrzeugsitz gesichert werden kann. Wenn eine erhöhte Kraft auf den Beckengurt 3 wirkt, wird das Dämpfungselement 7 zusammengedrückt und die unerwünschten Stoßbelastungskräfte absorbiert.

Anstelle eines Schaumstoffkörpers, wie er hier vorgesehen ist, kann selbstverständlich auch ein Verschiebeelement vorgesehen sein, das eine relativ harte Oberfläche aufweist. Dieses Verschiebeelement ist verschiebbar in der Führung 9 gelagert und stützt sich über Federn, beispielsweise Druckfedern, an der rückseitigen Wand innerhalb der Führung 9 ab, wodurch die verwendeten Druckfedern eine Dämpfung in gewünschter Weise ebenfalls sicherstellen.

## Patentansprüche

1. Mittel zum Absorbieren der auf einen Sicherheitsgurt an einem Kindersicherheitssitz (1) in Folge einer ruckartigen, hohen Stoßbelastung auftreffenden Aufprallkräfte, wobei der Sicherheitsgurt ein Sicherheitsgurt (3) eines Fahrzeugsitzes ist und zum Halten des Kindersicherheitssitzes (1) am Fahrzeugsitz und/oder zum Sichern des Kindes in dem Kindersicherheitssitz (1) dient und um mindestens eine Kante (4,) einer Führung (9) an den Sitzseitenwänden (10) des Sitzteiles (11) des Kindersicherheitssitzes (1) derart gelegt ist, dass der Sicherheitsgurt (2, 3) beim Aufprall um die mindestens eine Kante (4,) gestrafft wird, **dadurch gekennzeichnet, dass** mindestens in dem Umlenkungskantenbereich (4,) einer der Führungen an den Sitzseitenwänden (9,) ein kompressierbares elastisches oder plastisch verformbares oder ein federndes Dämpfungselement (7,) eingesetzt ist, das in Abhängigkeit von der darauf ausgeübten Druckkraft gemäß seiner definierten Federcharakteristik in die Sitzseitenwände oder gegenüber diesen verschiebbar oder drückbar oder elastisch oder plastisch verformbar ist.

2. Mittel nach Anspruch 1, **dadurch gekennzeichnet, dass** in den Sitzseitenwänden (10) des Sitzteiles (11) des Kindersicherheitssitzes (1) Führungen (9) zur Aufnahme des Beckengurtes des Sicherheitsgurtes (3) oder den Beckengurt- und/oder des Schultergurtabschnittes eines Dreipunktsicherheitsgurtes des Fahrzeugsitzes eingearbeitet sind und dass ein Dämpfungselement senkrecht zum anliegenden Beckengurt des Sicherheitsgurtes (3), Beckengurt- und/oder Schultergurtabschnitt verschiebbar oder verschwenkbar in der Führung und/oder in einer Lagerkammer der Seitenwand und/oder des Sitzteiles gelagert und von einer Federanordnung derart abgestützt ist, dass bei Auftreffen einer Aufprallkraft auf den Beckengurt des Sicherheitsgurtes (3) sich das Dampfungselement gegen die Kraft von Federn in die Aufnahme verschiebt oder verschwenkt.

3. Mittel nach Anspruch 1 oder 2, **dadurch gekennzeichnet dass** der Schultergurt des fahrzeugeigenen Sicherheitsgurtes (3) über einen Teil der Rückenlehne (16), der seitlichen Schulterstütze (12) des Kindersicherheitssitzes (1) oder an der Kopfstütze (13) des Kindersicherheitssitzes (1) über Führungen (14) geleitet ist und dass die Führung eine Polsterung aufweist oder dass dieser gegen eine Kraft einer Federanordnung verschwenkbares oder verschiebbares Element oder gegen einen in eine Kammer eingesetzten plastisch verformbaren Körper drückt.

4. Mittel nach Anspruch 3, **dadurch gekennzeichnet, dass** das Polster wulstartig auf einer Führungswand aufgetragen ist.

5. Mittel nach Anspruch 1 in Verbindung mit einem Kindersicherheitssitz mit einem eigenen Sicherheitsgurtsystem, einem sogenannten Hosenträgergurtsystem, das über ein Schloss an mindestens einen Schrittgurt anbindbar ist, **dadurch gekennzeichnet, dass** mindestens durch die als Führung vorgesehenen Durchbrüche (14) in der Rückenlehne (11) des Kindersicherheitssitz (1) geführte Hosenträgergurte (2) an einem Dämpfungselement (8) anliegen und dass unterhalb des Durchbruches (14) oder diesen begrenzend in der Rückenlehne ein komprimierbares Dämpfungselementes (8) eingesetzt oder ein gegen die Kraft einer Feder verschiebbares oder verschwenkbares Dämpfungselement (8) vorgesehen ist.

## Claims

1. Means for absorbing the impact forces impinging on a safety belt of a child safety seat (1) as a consequence of an abrupt, high shock loading, wherein the safety belt is a safety belt (3) of a vehicle seat and serves for retaining the child safety seat (1) at the vehicle seat and/or for securing the child in the child safety seat (1) and is laid around at least one edge (4) of a guide (9) at the seat side walls (10) of the seat part (11) of the child safety seat (1) in such a manner that the safety belt (2, 3) is tightened around the at least one edge (4) when impact occurs, **characterised in that** a compressible elastically or plastically deformable or resilient damping element (7) is inserted at least in the deflecting edge region (4) of one of the guides (9) at the seat side walls and is displaceable or compressible or elastically or plastically deformable in dependence on the compression force, which is exerted thereon, in accordance with a defined spring characteristic thereof in the seat side walls or relative thereto.

2. Means according to claim 1, **characterised in that** guides (9) for receiving the pelvic belt of the safety belt (3) or the pelvic belt section and/or shoulder belt section of a three-point safety belt of the vehicle seat are formed and that a damping element is mounted perpendicularly to the applied pelvic belt of the safety belt (3), pelvic belt section and/or shoulder belt section to be displaceable or pivotable in the guide and/or in a mounting chamber of the side wall and/or the seat part and is supported by spring arrangement in such a manner that when an impact force impinges on the pelvic belt of the safety belt (3) the damping element displaces or pivots in the receptacle against the force of springs.

3. Means according to claim 1 or 2, **characterised in that** the shoulder belt of the safety belt (3) belonging to the vehicle is guided over a part of the backrest (16), the lateral shoulder supports (12) of the child safety seat (1) or the head support (13) of the child safety seat (1) by way of guides (14) and that the guide is upholstered or that this presses against a force of a spring arrangement of a pivotable or displaceable element or against a plastically deformable body inserted in a chamber.

4. Means according to claim 3, **characterised in that** the upholstery is applied in bead-like manner to a guide wall.

5. Means according to claim 1 in conjunction with a child safety seat with an own safety belt system, a so-termed braces belt system which can be coupled by way of a lock to at least one crotch belt, **characterised in that** braces belts (2) guided at least through the passages (14), which are provided as guide, in the backrest (11) of the child safety seat (1) bear against a damping element (8) and that a compressible damping element (8) is inserted in the backrest below the passage (14) or adjacent thereto or a damping element (8) displaceable or pivotable against the force of a spring is provided.

## Revendications

1. Moyen d'absorption des forces de collision survenant sur une ceinture de sécurité sur un siège de sécurité pour enfant (1) suite à un choc par à-coup avec forte charge d'impact, la ceinture de sécurité étant une ceinture de sécurité (3) d'un siège de véhicule servant au maintien du siège de sécurité pour enfant (1) au siège du véhicule et/ou à la sécurité de l'enfant dans le siège de sécurité pour enfant (1) et se situant autour d'au moins une arête (4) d'un guidage (9) contre les parois latérales du siège (10) de la partie du siège (11) du siège de sécurité pour enfant (1) de façon à ce que la ceinture de sécurité (2,3) se tende en cas de collision au moins sur une arête (4), **caractérisé en cela** qu'au moins dans la zone de l'arête de déviation (4) d'un des guidages (9) des parois latérales du siège se trouve un élément d'amortissement (7) à ressort à compression élastique ou déformation plastique qui, en fonction de la pression exercée sur celui-ci, se déforme de façon élastique ou plastique, ou se glisse ou s'appuie dans les parois latérales du siège ou en face de celles-ci en respect de sa caractéristique d'amortissement définie.

2. Moyen selon la revendication 1 **caractérisé en cela** que dans les parois latérales du siège (10) de la partie du siège (11) du siège de sécurité pour enfant (1), il se trouve des guidages (9) de logement de la ceinture pour bassin de la ceinture de sécurité (3) ou pour la section de la ceinture pour bassin et/ou la section de la ceinture pour épaule d'une ceinture de sécurité à trois points du siège du véhicule et qu'un élément d'amortissement se trouve à la verticale de la ceinture pour bassin de la ceinture de sécurité (3), de la section de la ceinture pour bassin et/ou de la section de la ceinture pour épaule de façon à glisser ou à basculer dans la guidage et/ou dans une enceinte de palier de la paroi latérale et/ou de la pièce du siège et est appuyé sur un groupe de ressorts de façon qu'en cas de survenance de forces de collision sur la ceinture pour le bassin de la ceinture de sécurité (3), l'élément d'amortissement glisse ou bascule contre la force des ressorts dans le logement.

3. Moyen selon la revendication 1 ou 2 **caractérisé en cela** que la ceinture pour épaule de la ceinture de sécurité propre au véhicule (3) est conduite sur une partie du dossier (16), sur le support épaule latéral (12) du siège de sécurité pour enfant (1) ou sur l'appuie-tête (13) par l'intermédiaire des guidages (14) et que le guidage présente un rembourrage ou que la ceinture appuie un élément glissant ou basculant contre une force d'un groupe de ressorts ou contre un corps à déformation plastique dans un palier.

4. Moyen selon la revendication 3 **caractérisé en cela** que le rembourrage est placé en forme de bourrelet sur une paroi de guidage.

5. Moyen selon la revendication 1 en lien avec un siège de sécurité pour enfant avec une ceinture de sécurité propre, un système de bretelles qui peut être connecté par un dispositif de fermeture à au moins une sangle sous-pelvienne, **caractérisé en cela** qu'au moins les bretelles (2) guidées par les percées (14) prévues en tant que guidage dans le dossier (11) du siège de sécurité pour enfant (1) se trouvent contre un élément d'amortissement (8) et que sous la percée (14) ou à la limite de celle-ci dans le dossier, un élément d'amortissement (8) compressible est placé ou un élément d'amortissement (8) glissant ou basculant contre la force d'un ressort est prévu.
